# EUROPÄISCHE PATENTSCHRIFT

(11) **EP 0 719 393 B1**
(45) Veröffentlichungstag und Bekanntmachung des Hinweises auf die Patenterteilung: **03.12.1997**
(21) Anmeldenummer: 94927661.2
(22) Anmeldetag: 28.09.1994
(51) Int. Cl.: F16H 41/24, B60K 17/02, F16D 33/18

(54) **EINRICHTUNG ZUR MOMENT-ÜBERTRAGUNG EINER ANTRIEBSEINHEIT AUF EIN GETRIEBE MIT EINEM HYDRODYNAMISCHEN WANDLER**
DEVICE FOR THE TRANSMISSION OF MOMENT FROM A DRIVE UNIT TO A GEARBOX USING A HYDRODYNAMIC CONVERTER
SYSTEME PERMETTANT DE TRANSMETTRE LE COUPLE D'UNE UNITE D'ENTRAINEMENT A UNE BOITE DE VITESSES A L'AIDE D'UN CONVERTISSEUR HYDRODYNAMIQUE

(30) Priorität: 02.10.1993 DE 4333644
(43) Veröffentlichungstag der Anmeldung: 03.07.1996
(73) Patentinhaber: ZF FRIEDRICHSHAFEN Aktiengesellschaft, 88038 Friedrichshafen (DE)
(72) Erfinder: GÄRTNER, Lutz, D-88085 Langenargen (DE)
(74) Vertreter: Zietlow, Karl-Peter
(86) Internationale Anmeldenummer: EP9403241
(87) Internationale Veröffentlichungsnummer: WO9509994

(56) Entgegenhaltungen:
- DE-A- 2 722 936
- GB-A- 1 061 353
- GB-A- 2 052 689
- US-A- 3 713 353
- US-A- 3 839 864

## Beschreibung

Die Erfindung betrifft eine Einrichtung zur Moment-Übertragung einer Antriebseinheit auf ein Getriebe mit hydrodynamischem Wandler nach dem Oberbegriff des Anspruches. Eine derartige Einrichtung ist aus der GB-A 1061353 bekannt.

Aus dem Buch J. Looman, Zahnradgetriebe, Band 26, 1970, Seite 124, Abbildung 5.45, ist weiterhin ein hydrodynamischer Wandler bekannt. Der hydrodynamische Wandler besteht aus einem Wandlergehäuse und, darin integriert, einem Pumpen-, einem Turbinen- und einem Leitrad mit Freilauf. Das Pumpenrad ist mit dem Wandlergehäuse drehfest verbunden. Die Energieübertragung vom Pumpen- auf das Turbinenrad erfolgt in bekannter Weise über ein Strömungsmedium, z. B. Öl. Das Turbinenrad wandelt die Strömungsbewegung in eine Drehbewegung um und treibt eine Getriebeeingangswelle an. Die Moment-Übertragung einer schematisch dargestellten Welle auf das Wandlergehäuse erfolgt über einen Mitnehmer. Der Mitnehmer ist im Bereich der Welle mit dieser axial verschraubt. Des weiteren ist der Mitnehmer in axialer Richtung mit einer Aufnahme verschraubt, welche wiederum mit dem Wandlergehäuse fest verbunden ist. Das Wandlergehäuse bzw. das Pumpenrad dreht sich somit mit der gleichen Drehzahl wie die schematisch dargestellte Welle.
Im Bereich der Mittelachse hat das Wandlergehäuse auf der der Welle zugewandten Seite einen Zapfen. Dieser Zapfen ist formschlüssig in einer Aussparung der Welle. Hierdurch ist die radiale Position des hydrodynamischen Wandlers gegenüber der Welle fixiert. Die axiale Position des hydrodynamischen Wandlers gegenüber der Welle ist durch die Verschraubung Welle/Mitnehmer und Mitnehmer/Aufnahme fixiert.

Von Nachteil bei dieser Ausführung ist, daß beim Einbau eines Getriebes, z. B. in ein Kraftfahrzeug, zwischen Motorblock und Getriebegehäuse ein großer Freiraum vorhanden sein muß, da die Schraubverbindung Mitnehmer/Wandlergehäuse nur in axialer Richtung zugängig ist.

Die Erfindung hat die Aufgabe, eine einfachere Einbaulösung bei gleichzeitiger Verringerung der axialen Baulänge zu gewährleisten, wobei ein guter und gleichmäßiger Betrieb gewährleistet sein soll.

Die Aufgabe wird erfindungsgemäß durch die im Patentanspruch aufgeführten Merkmale gelöst. Als Verbindungselemente im Sinne der Erfindung sind z. B. zu verstehen: Schrauben, Nieten, Bolzen und Stifte. Die erfindungsgemäße Lösung bietet den Vorteil, daß aufgrund der radialen Zugänglichkeit der Befestigungselemente der Freiraum zwischen Motorblock und hydrodynamischem Wandler verkürzt werden kann. Dies ist besonders dann von Vorteil, wenn für die Antriebs-/Getriebeeinheit ein begrenzter Bauraum vorhanden ist, wie z. B. bei Kraftfahrzeugen mit Heckmotor oder Mittelmotor.

Nach der Erfindung wird vorgeschlagen, daß die Verbindungselemente am Umfang Mitnehmer/Wandlergehäuse äquidistant angeordnet sind und die Anzahl der Verbindungselemente geradzahlig ist. Hierdurch wird der Vorteil erzielt, daß Formänderungen des Mitnehmers, hervorgerufen durch innere Gefügespannungen, aufgrund gegenüberliegender Verbindungselemente sich ausgleichen.

Nach der Erfindung wird vorgeschlagen, daß der Mitnehmer aus zwei Schenkeln besteht, die Schenkel einen rechten Winkel einschließen und der Mitnehmer im Bereich des Winkels eine Aussparung aufweist. Hierdurch wird der Vorteil erzielt, daß der Mitnehmer in radialer Richtung biegeweich ist. Hiermit wird sichergestellt, daß die radiale Position des hydrodynamischen Wandlers gegenüber einer Welle, wie beim Stand der Technik, nur durch den Zapfen bestimmt ist. Die radialen Befestigungselemente sind aufgrund der biegeweichen Ausgestaltung des Mitnehmers nicht bestimmend für die radiale Position des hydrodynamischen Wandlers.

In der Zeichnung ist ein Ausführungsbeispiel dargestellt.
Es zeigen:
- Fig. 1: eine Ausführungsform der Einrichtung;
- Fig. 2: eine Draufsicht der Ausführungsform.

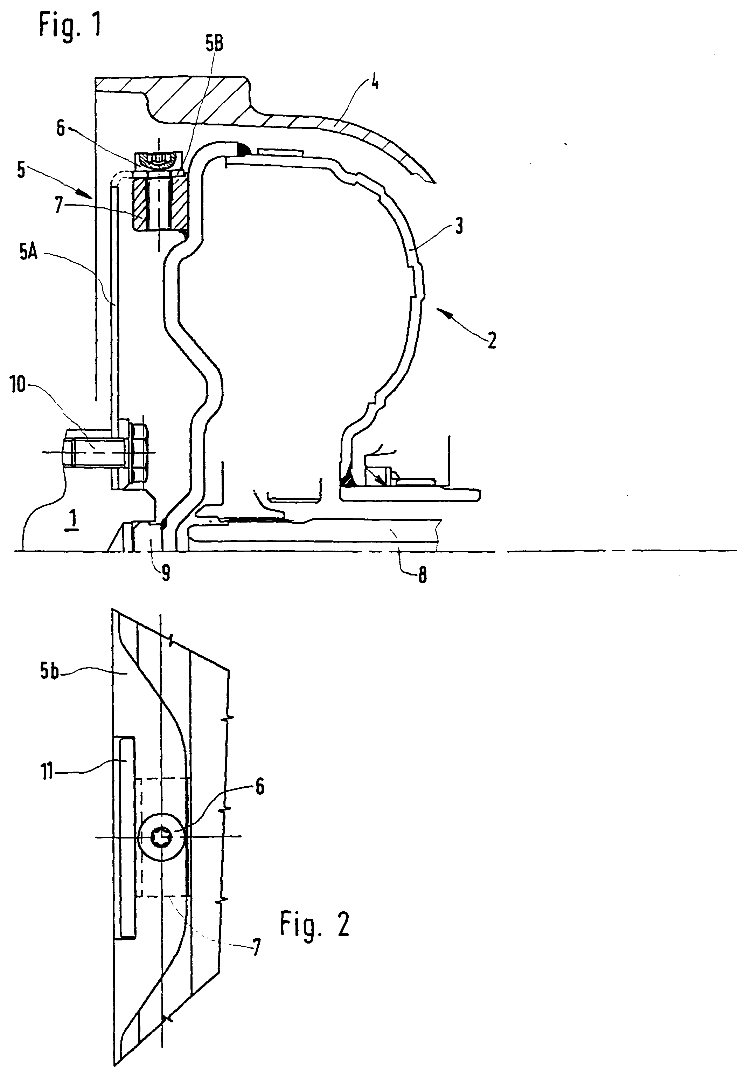

Fig. 1 zeigt eine Ausführungsform der Einrichtung zur Moment-Übertragung einer Antriebseinheit auf ein Getriebe mit hydrodynamischem Wandler. Mit 1 bezeichnet ist die Ausgangswelle einer nicht dargestellten Antriebseinheit, bei einer Brennkraftmaschine z. B. ist dies die Kurbelwelle. Mit 2 bezeichnet ist ein hydrodynamischer Wandler, bestehend aus einem Wandlergehäuse 3, in dem ein nicht dargestelltes Pumpen-, Turbinen und Leitrad mit Freilauf integriert sind. Der hydrodynamische Wandler 2 befindet sich in einem Getriebegehäuse 4. Mit dem Wandlergehäuse 3 verbunden sind mehrere Aufnehmer 7.
Ein Mitnehmer 5 ist mit der Ausgangswelle 1 mittels Schraube 10 lösbar verbunden. Die Schraube 10 fixiert den Mitnehmer 5 gegenüber der Ausgangswelle 1 in axialer Richtung.
Der Mitnehmer 5 besteht aus zwei Schenkeln 5A und 5B, die einen rechten Winkel einschließen. Im Bereich des rechten Winkels weist der Mitnehmer 5 eine Aussparung 11 auf. Diese Aussparung 11 ist in Fig. 2 ersichtlich. Der Schenkel 5B ist mit der Aufnahme 7 durch ein Verbindungselement 6 verbunden. Unter Verbindungselement im Sinne der Erfindung sind zu verstehen: Schrauben, Nieten, Bolzen oder Stifte. Dargestellt ist eine Schraube.
Die Moment-Übertragung der nicht dargestellten Antriebseinheit auf das Pumpenrad ist somit: Ausgangswelle 1, Mitnehmer 5, Aufnahme 7, Wandlergehäuse 3. Die Energieübertragung des nicht dargestellten Pumpenrades auf das nicht dargestellte Turbinenrad erfolgt über ein Strömungsmedium, z. B. Öl. Das Turbinenrad wandelt die Strömungsbewegung in eine Drehbewegung um und treibt eine Getriebeeingangswelle 8 an.
Der hydrodynamische Wandler 2 besitzt einen Zapfen 9. Dieser Zapfen fixiert den hydrodynamischen Wandler 2 zur Ausgangswelle 1 in radialer Richtung.
Die Aussparung 11 des Mitnehmers 5 bewirkt, daß der Mitnehmer 5 in radialer Richtung biegeweich ist, so daß eine doppelte Fixierung in radialer Richtung durch Zapfen 9 und Mitnehmer 5/Aufnahme 7 vermieden wird. Hierdurch wird einer erhöhten Belastung der Lager des hydrodynamischen Wandlers 2 durch außermittigen Einbau vorgebeugt.

In Fig. 2 dargestellt ist die Einrichtung aus Fig. 1 in Draufsicht. Mit 5B bezeichnet ist der Schenkel des Mitnehmers 5. Im Bereich des rechten Winkels hat der Mitnehmer 5 eine Aussparung 11. Die Verbindung Mitnehmer 5 bzw. Schenkel 5B mit dem Wandlergehäuse 3 erfolgt über ein Verbindungselement 6 und der gestrichelt dargestellten Aufnahme 7.

## Patentansprüche

1. Einrichtung zur Moment-Übertragung von einer Antriebseinheit auf ein Getriebe mit einem hydrodynamischen Wandler (2), welcher aus einem Wandlergehäuse (3), einem Pumpen-, einem Turbinen- und einem mit einem Freilauf versehenen Leitrad besteht, wobei das Pumpenrad mit dem Wandlergehäuse (3) verbunden und wobei zwischen Antriebseinheit und hydrodynamischem Wandler ein Mitnehmer (5) angeordnet ist, welcher mit dem Wandlergehäuse (3) durch mehrere Verbindungselemente (6) in radialer Richtung gegeneinander fixiert ist, welcher aus zwei einen rechten Winkel einschließenden Schenkeln (5A, 5B) besteht und welcher Ausnehmungen (11) aufweist, dadurch **gekennzeichnet**, daß die Anzahl der Verbindungselemente (6) geradzahlig ist, so daß Formänderungen des Mitnehmers, hervorgerufen durch innere Gefügespannungen, aufgrund gegenüberliegender Verbindungselemente sich ausgleichen, und daß der Mitnehmer (5) im Bereich des rechten Winkels eine Aussparung (11) aufweist.

## Claims

1. Device for transmitting torque from a drive unit to a gear unit having a hydrodynamic converter (2), which comprises a converter housing (3), a pump wheel, a turbine wheel and a guide wheel provided with a free-wheeling device, the pump wheel being connected to the converter housing (3) and there being disposed between drive unit and hydrodynamic converter a driver (5), which is fixed to the converter housing (3) by a plurality of connecting elements (6) in a radial direction relative to one another, comprises two limbs (5A, 5B) forming a right angle and has recesses (11), **characterized** in that the number of connecting elements (6) is an even number so that dimensional variations of the driver, which are caused by internal structural stresses, are compensated by opposite-lying connecting elements, and that the driver (5) in the region of the right angle has a recess (11).

## Revendications

1. Dispositif de transmission du couple d'une unité d'entraînement vers une boîte de vitesses comportant un transformateur (2) hydrodynamique qui est constitué d'un boîtier (3), d'une pompe, d'une turbine et d'une roue principale à une roue libre, dans lequel la roue de la pompe est solidaire du boîtier (3) et dans lequel un entraîneur (5) est monté entre l'unité d'entraînement et le transformateur hydrodynamique, cet entraîneur étant lié au boîtier (3) par plusieurs éléments de liaison (6) fixés les uns aux autres selon une direction radiale, cet entraîneur étant constitué de deux bras (5A, 5B) à angle droit et comportant des évidements (11), **caractérisé en ce que** le nombre des éléments de liaison (6) est pair, afin que des modifications de forme de l'entraîneur, nécessitées par des tensions intérieures dues à des éléments de liaison disposés en regard, soient compensées, et en ce que l'entraîneur (5) comporte un évidement (11) dans la zone de l'angle droit.
